# EUROPEAN PATENT APPLICATION

(11) **EP 2 237 513 A1**
(43) Date of publication of application: **06.10.2010**
(21) Application number: 08866960.1
(22) Date of filing: 26.12.2008
(51) Int. Cl.: H04L 27/14

(54) **DEMODULATION DEVICE**

(30) Priority: 28.12.2007 JP 2007340557
(71) Applicant: Furuno Electric Co., Ltd., Hyogo 662-8580 (JP)
(72) Inventor: TSUDAKA, Kentaro, Nishinomiya-City Hyogo 662-8580 (JP); KAWASHITA, Katsushi, Nishinomiya-City Hyogo 662-8580 (JP)
(74) Representative: Williams, Michael Ian
(86) International application number: PCT/JP2008/073841
(87) International publication number: WO 2009/084677

(57) **Abstract**

Provided is a demodulation device that can reliably perform demodulation even in a communication environment where a modulation index changes. Upon reception of communication signals of different modulation indexes from other ships, a demodulation device (1) performs detection and demodulation by using both of synchronous detection and frequency wave detection. The detection and demodulation results are determined to be correct or incorrect based on an error detection code and demodulation data determined to be correct is outputted. That is, if both of the detection results are determined to be correct, the demodulation device (1) outputs one of the demodulation data, for example, synchronous detection/demodulation data. On the other hand, if only the synchronous detection/demodulation data is determined to be correct, the demodulation device (1) outputs synchronous detection/demodulation data S. If only the frequency wave detection/demodulation data is determined to be correct, the demodulation device (1) outputs frequency wave detection/demodulation data F.

## Description

### TECHNICAL FIELD

The present invention relates to a demodulation device for demodulating a communication signal that is frequency-modulated, and particularly to a demodulation device for demodulating the communication signal that is GMSK-modulated.

### BACKGROUND ART

Currently, systems (AISs) in which an automatic ship identification device for automatically transmitting and receiving data peculiar to a ship, such as a unique identification, ship's name, position, course, ship speed, and destination is mounted on each ship are employed. In the AIS, the ship peculiar data is communicated by GMSK-modulating a carrier wave signal for communication. As for the demodulation of such a communication signal, a synchronization wave detecting method, a frequency wave detecting method, and a delay wave detecting method exist. For example, Patent Document 1 includes two or more wave detectors of different methods, such as a synchronization wave detector, a frequency wave detector, and a delay wave detector. The device performs detection and demodulation by selecting one out of the wave detectors of two or more methods according to an operation input from an operating module.

### REFERENCE DOCUMENT(S) OF RELATED ART

[Patent Document 1] Japan Patent No. 3,390,521

### DISCLOSURE OF THE INVENTION

### PROBLEM(S) TO BE SOLVED BY THE INVENTION

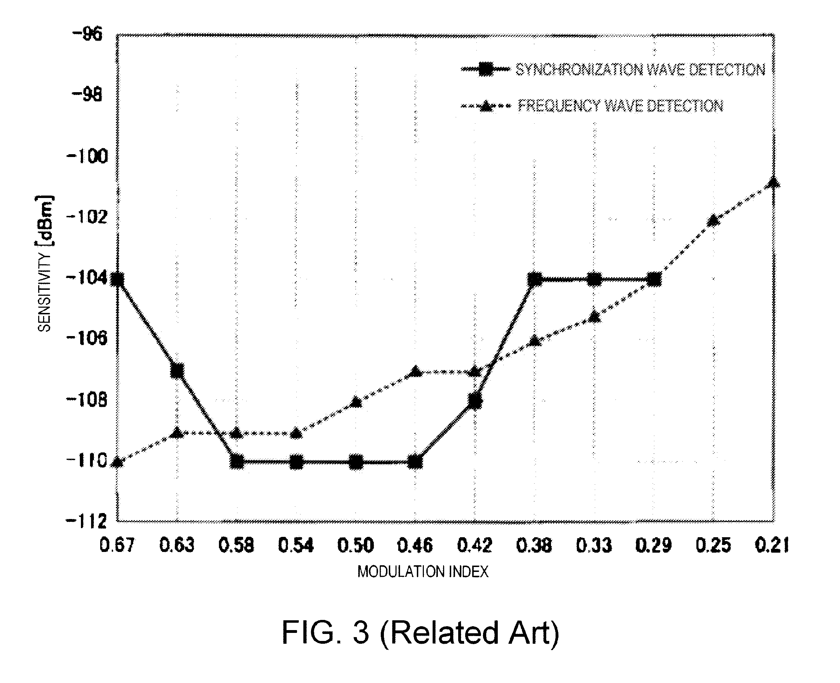

Among these detecting methods, because the delay wave detection has a sensitivity lower as compared with the synchronization wave detection and the frequency wave detection, a combined use of two kinds of wave detectors of the synchronization wave detection and the frequency wave detection is considered to be realistic. Here, between the synchronization wave detection and the frequency wave detection, there is a difference in the sensitivity characteristic as shown in Fig. 3, and each has advantages and disadvantages. Fig. 3 shows the sensitivity characteristic with respect to changes in modulation indexes of the synchronization wave detection and the frequency wave detection. This characteristic shows the case where GMSK modulation is demodulated, and a target modulation index is 0.5. Further, the sensitivity shows a level which becomes less than PER20%.

As shown in Fig. 3, the synchronization wave detection becomes better in sensitivity than the frequency wave detection near the target modulation index. That is, the synchronization wave detection will have a characteristic which is strong against noises near the target modulation index as compared with the frequency wave detection. However, if the modulation index shifts to separate from the target value, the sensitivity falls rapidly. On the other hand, although the sensitivity like the synchronization wave detection cannot be obtained for the frequency wave detection near the target modulation index, the sensitivity falls less even if the modulation index shifts. That is, although the sensitivity is inferior to the synchronization wave detection near the target modulation index, the sensitivity to the some extent can be obtained in a wide range of the modulation index.

Although the AIS has a standard of using the GMSK modulation, there is no problem if the modulation index is within a predetermined frequency mask width. However, the modulation index does not become 0.5 due to individual differences of devices, and may vary to 0.4, 0.6 or the like.

For this reason, for the ships using the AIS, practically, it is necessary to adopt the two or more detecting methods like the conventional technology described above and use at least both the synchronization wave detection and the frequency wave detection.

However, in a case where the two or more wave detections are switched by the operation input like the above conventional technology, if the modulation index differs for every ship, a suitable detecting method must also be changed. However, because one slot of the AIS is about 26 msec, it cannot actually be switched for every slot with a manual operation by an operator. Thus, the detecting method will be switched by using experiences of the operator. However, by this method, it will be impossible to specify the suitable detecting method for every slot, and a possibility that the slot to be able to be demodulated becomes impossible to be demodulated will increase.

Further, it is also possible to detect an S/N and a frequency transition to automatically switch the detecting method for every slot; however, in this case, it is difficult to reliably determine the detecting method under a noise environment.

Therefore, an object of the present invention is to realize a demodulation device that can reliably perform a demodulation even in a communication environment where the modulation index changes.

### MEANS FOR SOLVING THE PROBLEMS

The present invention is directed to a demodulation device for receiving and demodulating a communication signal that is frequency-modulated. The demodulation device includes a synchronization wave detection module for demodulating a received communication signal by synchronization wave detection, and a frequency wave detection module for demodulating the same communication signal as the communication signal inputted into the synchronization wave detection module by frequency wave detection. Further, the demodulation device includes a demodulation data output module for outputting demodulation data based on a determination result whether the synchronization wave detection is correct or incorrect and a determination result whether the frequency wave detection is correct or incorrect.

The demodulation data output module of the demodulation device according to the invention may select communication data based on a communication signal of the detection module that is determined to be correct. The demodulation data output module, when the determination result whether the synchronization wave detection is correct or incorrect and the determination result whether the frequency wave detection is correct or incorrect are both correct by the determinations, may select the communication data based on the communication signal of the detection module set in advance. Meanwhile, the demodulation data output module may not output the communication data if the determination result whether the synchronization wave detection is correct or incorrect and the determination result whether the frequency wave detection is correct or incorrect are both incorrect by the determinations.

In this configuration, the synchronization wave detection module and the frequency wave detection module may perform the demodulations of the same communication signal in parallel. The demodulation data output module may output the communication data with the demodulation result is correct by the determination. Specifically, if determined to be correct for both the synchronization wave detection and the frequency wave detection, one of the demodulation data set in advance may be outputted, and if one of them is determined to be correct, demodulation data that is demodulated by the detection determined to be correct may be outputted. Further, if both are determined to be incorrect, the demodulation data may not be outputted. By this, if the detection and demodulation can be made correctly with at least one of the detecting methods, the demodulation data can be outputted.

The demodulation data output module of the demodulation device according to the invention determines whether the detection is correct or incorrect based on an error detection code of the communication data demodulated by the synchronization wave detection, and an error detection code of the communication data demodulated by the frequency wave detection.

In this configuration, the error detection code may be used as a particular determination method. Thereby, an accurate determination whether the detection is correct or incorrect is possible by using the demodulation data.

In the demodulation device according to the invention, the communication signal to be demodulated may be a communication signal that is GMSK-modulated. In addition, the synchronization wave detection module of the demodulation device may be a GMSK synchronization wave detection module, and the frequency wave detection module may be a GMSK frequency wave detection module.

In this configuration, supposing the AIS, the demodulation device using the particular GMSK modulation can be constructed. Thereby, the ship peculiar data of the AIS can be demodulated correctly and reliably.

### EFFECT OF THE INVENTION

According to the aspect of the invention, the communication signal can be reliably demodulated to acquire data correctly even in the communication environment where the modulation index time-sequentially changes frequently.

### BRIEF DESCRIPTION OF THE DRAWINGS

Fig. 1 is a block diagram showing a substantial configuration of a demodulation device according to an embodiment of the invention.
Fig. 2 is a chart showing a concept of processing when communication signals of different modulation indexes are received.
Fig. 3 shows a sensitivity characteristic with respect to changes in modulation indexes of synchronization wave detection and frequency wave detection.

### DESCRIPTION OF NUMERALS

1: Demodulation Device; 10: Reception Module; 11: Synchronization Wave Detection Module; 12: Frequency Wave Detection Module; 13: Communication Data Output Module; and 20: Reception Antenna.

### BEST MODE OF CARRYING OUT THE INVENTION

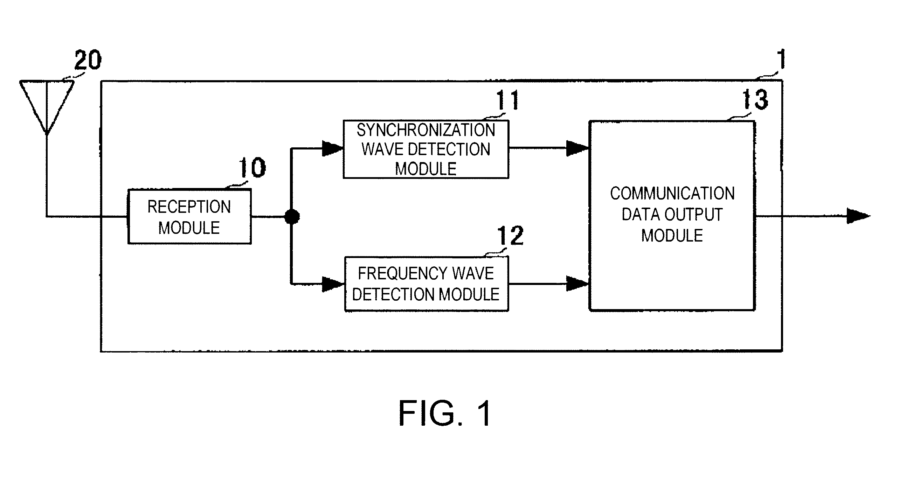

Fig. 1 is a block diagram showing a substantial configuration of a demodulation device 1 of this embodiment.

In this embodiment, the demodulation device for demodulating a communication signal in an AIS that is GMSK-modulated and outputting ship peculiar data is described.

The demodulation device 1 includes a reception module 10, a synchronization wave detection module 11, a frequency wave detection module 12, and a communication data output module 13.

The reception module 10 connects with a reception antenna 20, and it receives the communication signal that is GMSK-modulated by another ship (another station) to convert it into an IF signal of a predetermined frequency. The reception module 10 outputs the IF signal to the synchronization wave detection module 11 and the frequency wave detection module 12. Here, the reception module 10 outputs the IF signal so that the signal of the same slot is inputted into the synchronization wave detection module 11 and the frequency wave detection module 12.

The synchronization wave detection module 11 includes a known synchronization wave detection circuit, and it synchronizes phases of a reference signal generated within the device concerned with the received IF signal, and performs demodulation by multiplying the reference signal and a signal which is shifted by π/2 in phase from the reference signal by the IF signal. The synchronization wave detection demodulation data is generated for every slot, is data containing ship peculiar data to be a target and an error detection code, and is outputted to the communication data output module 13.

The frequency detection module 12 includes a known frequency wave detection circuit, and performs a FM demodulation using the reference signal generated within the device concerned and a modulation index. The frequency wave detection demodulation data is also generated for every slot, is data containing the ship peculiar data to be the target and the error detection code, and is outputted to the communication data output module 13.

The communication data output module 13 extracts the error detection code for each of the synchronization wave detection demodulation data and the frequency wave detection demodulation data to check a consistency of the data based on the error detection code. Then, if the data is consistent, it is determined to be correct, and the data is not consistent, it is determined to be incorrect. The communication data output module 13, if both the synchronization wave detection demodulation data and the frequency wave detection demodulation data are determined to be correct, outputs one of the demodulation data. For example, by setting the synchronization wave detection demodulation data to be default, the communication data output module 13 outputs the synchronization wave detection demodulation data when both the demodulation data are correct by the determination. The communication data output module 13 outputs the synchronization wave detection demodulation data if the synchronization wave detection demodulation data is determined to be correct and the frequency wave detection demodulation data is determined to be incorrect. The communication data output module 13 outputs the frequency wave detection demodulation data if the synchronization wave detection demodulation data is determined to be incorrect and the frequency wave detection demodulation data is determined to be correct. The communication data output module 13 does not output the demodulation data if both of the demodulation data are determined to be incorrect.

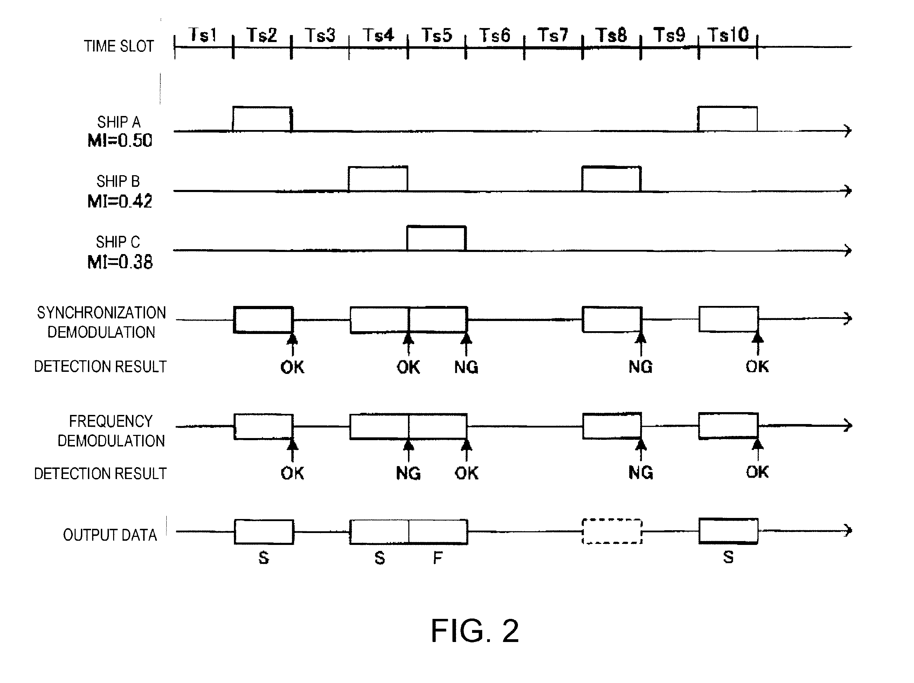

A particular example using the demodulation device of such a configuration when communication signals of different modulation indexes are received is described with reference to Fig. 2. Note that, in the following description, an example in which outputting the synchronization wave detection demodulation data when both of the detection demodulation data are determined to be correct is a default setting is shown.

Fig. 2 is a chart showing a concept of processing when the communication signals of different modulation indexes are received. In Fig. 2, "MI" represents the modulation index.

As shown in Fig. 2, a case where a ship "A" performs a transmission by a modulation index of MI= 0.50, a ship "B" performs a transmission by a modulation index of MI= 0.42, and a ship "C" performs a transmission by a modulation index of MI=0.38 is considered.

The demodulation device 1 of a ship concerned does not perform demodulation unless a communication signal is received at a time slot Ts1.

When the communication signal is received from the ship A at a time slot Ts2, the demodulation device 1 of the ship concerned performs the detection and demodulation by both the synchronization wave detection module 11 and the frequency wave detection module 12, and generates synchronization wave detection demodulation data and frequency wave detection demodulation data. When these detection demodulation data are determined to be correct by the communication data output module 13, the communication data output module 13 outputs synchronization wave detection demodulation data S.

Next, in the demodulation device 1 of the ship concerned, the demodulation is not performed unless the communication signal is received at a time slot Ts3, and the output of the demodulation data is not performed as well.

Next, if the communication signal is received from the ship B at a time slot Ts4, the demodulation device 1 performs the detection and demodulation by both the synchronization wave detection module 11 and the frequency wave detection module 12, and generates the synchronization wave detection demodulation data and the frequency wave detection demodulation data. Here, because the communication signal of the ship B has the modulation index of MI= 0.42, the synchronization wave detection has a higher sensitivity than that of the frequency wave detection, as shown in Fig. 3. Due to the sensitivity difference and a level of the received communication signal, the ship communication data output module 13 determines that the synchronization wave detection demodulation data is correct, and if the frequency wave detection demodulation data is determined to be incorrect, the communication data output module 13 outputs the synchronization wave detection demodulation data S.

Next, when the communication signal is received from the ship C at a time slot Ts5, the demodulation device 1 performs the detection and demodulation by both the synchronization wave detection module 11 and the frequency wave detection module 12, and generates the synchronization wave detection demodulation data and the frequency wave detection demodulation data. Here, because the communication signal of the ship C has the modulation index of MI= 0.38, the frequency wave detection has a higher sensitivity than that of the synchronization wave detection, as shown in Fig. 3. Due to the sensitivity difference and the level of the received communication signal, the ship communication data output module 13 determines that the frequency wave detection demodulation data is correct, and if the synchronization wave detection demodulation data is determined to be incorrect, the communication data output module 13 outputs the frequency wave detection demodulation data F. In this case, if the synchronization wave detection demodulation data is also determined to be correct, the synchronization wave detection demodulation data is outputted according to the default setting.

Next, the demodulation device 1 does not perform the demodulation and does not perform the output of the demodulation data unless the communication signals are received at time slots Ts6 and Ts7.

Next, if the communication signal is again received from the ship B at a time slot Ts8, the demodulation device 1 performs the detection and demodulation by both the synchronization wave detection module 11 and the frequency wave detection module 12, and generates the synchronization wave detection demodulation data and the frequency wave detection demodulation data. In this case, if the ship communication data output module 13 determines that both the synchronization wave detection demodulation data and the frequency wave detection demodulation data are incorrect by the level of the received communication signal, the communication data output module 13 does not output the detection demodulation data.

Next, the demodulation device 1 does not perform the demodulation and does not perform the output of the demodulation data unless the communication signal is received at a time slot Ts9.

Next, when the communication signal is again received from the ship A at a time slot Ts10, the demodulation device 1 performs the detection and demodulation by both the synchronization wave detection module 11 and the frequency wave detection module 12, and generates the synchronization wave detection demodulation data and the frequency wave detection demodulation data. If the communication data output module 13 determines that these detection demodulation data are correct, the communication data output module 13 outputs the synchronization wave detection demodulation data S according to the default setting.

As described above, by using the configuration and the processing of this embodiment, the communication data can be demodulated reliably and correctly even in the communication environment where the modulation index varies for every slot.

Note that although the AIS is described as an example in the above embodiment, the above configuration can also be applied to communication devices using other GMSK modulation methods.

### INDUSTRIAL APPLICABILITY

The present invention is suitable for a demodulation device for demodulating a communication signal that is frequency-modulated, and is particularly suitable for a demodulation device for demodulating a communication signal that is GMSK-modulated.

## Claims

1. A demodulation device for receiving and demodulating a communication signal that is frequency-modulated, comprising:
a synchronization wave detection module for demodulating the received communication signal by synchronization wave detection;
a frequency wave detection module for demodulating the same communication signal as the communication signal inputted into the synchronization wave detection module by frequency wave detection; and
a demodulation data output module for outputting communication data based on a determination result whether the synchronization wave detection is correct or incorrect and a determination result whether the frequency wave detection is correct or incorrect.

2. The demodulation device of Claim 1, wherein the demodulation data output module selects the communication data based on the communication signal of the detection module that is determined to be correct.

3. The demodulation device of Claim 2, wherein the demodulation data output module selects the communication data based on the communication signal of the detection module set in advance when both the determination result of the synchronization wave detection of whether the detection is correct or incorrect and the determination result of the frequency wave detection of whether the detection is correct or incorrect are determined to be correct.

4. The demodulation device of Claim 1, wherein the demodulation data output module does not output the communication data when both of a determination result of the synchronization wave detection of whether the detection is correct or incorrect and a determination result of the frequency wave detection of whether the detection is correct or incorrect are determined to be incorrect.

5. The demodulation device of Claims 1 to 4, wherein the demodulation data output module performs the determination of whether the detection is correct or incorrect based on an error detection code of the communication data demodulated by the synchronization wave detection and an error detection code of the communication data demodulated by the frequency wave detection.

6. The demodulation device of Claims 1 to 5, wherein the communication signal is a communication signal that is GMSK-modulated, the synchronization wave detection module is a GMSK synchronization wave detection module, and the frequency wave detection module is a GMSK frequency wave detection module.
